# EUROPEAN PATENT APPLICATION

(11) **EP 2 660 970 A1**
(43) Date of publication of application: **06.11.2013**
(21) Application number: 13166392.4
(22) Date of filing: 03.05.2013
(51) Int. Cl.: H02M 7/487

(54) **Inverter circuit having a junction gate field-effect transistor**

(30) Priority: 03.05.2012 US 201213463288
(71) Applicant: Hamilton Sundstrand Corporation, Windsor Locks, CT 06096-1010 (US)
(72) Inventor: White, Adam Michael, Belvidere, IL 61008 (US)
(74) Representative: Hughes, Andrea Michelle

(57) **Abstract**

An example inverter circuit assembly includes at least one first transistor device and at least one second transistor device. The second transistor device comprises a silicon carbide junction gate field-effect transistor. The at least one second transistor device is an inner transistor device relative to the at least one first transistor device.

## Description

### BACKGROUND

This disclosure relates generally to inverters and, more particularly, to inverters incorporating a normally-on transistor, such as a normally-on junction gate field-effect transistor (JFET).

Inverters are used in a wide variety of applications to change direct current to alternating current. Some inverters provide variable frequency alternating current power to loads, such as alternating current motors on aircraft.

There are various types of inverters, including two-level inverters, which typically synthesize only two voltage levels, and neutral point clamped inverters, which are able to synthesize three voltage levels. Neutral point clamped inverters produce less distorted voltage waveforms than two-level inverters, as is known.

Neutral point clamped inverters commonly use normally-off devices for all transistors. These normally-off devices limit a current shoot-through upon loss of gate drive control power but in some instances have higher on-state losses than comparable normally-on devices. Normally-on devices do not limit current shoot-through.

### SUMMARY

An example inverter circuit assembly includes at least one first transistor device and at least one second transistor device. The second transistor device comprises a normally-on silicon carbide junction gate field-effect transistor. The at least one second transistor device is an inner transistor device relative to the at least one first transistor device.

An example inverter system includes an inverter having at least one inner transistor device and at least one outer transistor device. The at least one inner transistor device comprises a normally-on transistor.

An example method of converting DC power to AC power includes commutating the AC load current through combinations of normally-on and normally-off transistor devices of an inverter circuit.

### DESCRIPTION OF THE FIGURES

The various features and advantages of the disclosed examples will become apparent to those skilled in the art from the detailed description. The figures that accompany the detailed description can be briefly described as follows:
Figure 1 shows an example inverter circuit.
Figure 2 shows a high level schematic view of a system incorporating the inverter circuit of Figure 1.

### DETAILED DESCRIPTION

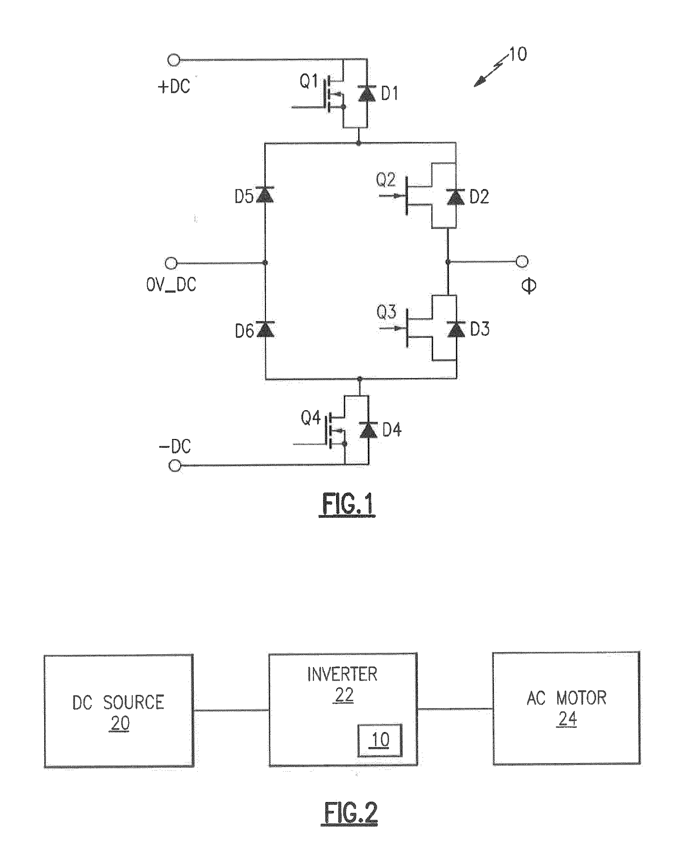

Referring to Figures 1 and 2, an example inverter circuit 10 is a neutral point clamped inverter circuit. Direct current (DC) to alternating current (AC) inverters are commonly used to provide variable frequency and voltage AC power to many loads, particularly AC motors. The example inverter circuit 10 is one leg of a three-phase inverter.

The example inverter circuit 10 forms a portion of an inverter system 22. A DC source 20 sends power through the inverter system 22 to an AC motor 24. The inverter circuit 10 provides AC power to loads on an aircraft in this example.

The example inverter circuit 10 includes transistor devices Q1 to Q4. The transistor devices Q1 and Q4 are in closer proximity to DC terminals +DC and -DC than the transistor devices Q2 and Q3. The transistor devices Q2 and Q3 are in closer proximity to the AC terminal Φ than the transistor devices Q1 and Q4. The transistor devices Q1 and Q4 are considered outer devices, and the transistor devices Q2 and Q3 are considered inner or middle devices.

The middle two transistor devices Q2 and Q3 of the example inverter circuit 10 are normally-on and the outer two transistor devices are normally-off. Further, in this example, the middle two transistor devices are depletion mode Silicon Carbide junction gate field-effect transistors (JFETs), and the outer two transistor devices Q1 and Q4 are Silicon Carbide metal-oxide-semiconductor field-effect transistors (MOSFETs). In other examples, the outer transistor devices Q1 and Q4 are other types of MOSFETs, enhancement mode JFETs, or insulated gate bipolar transistors (IGBTs).

The example inverter circuit 10 also includes diodes D1 to D6. The diodes D I to D6 of the example inverter circuit 10 are Silicon Carbide Schottky diodes.

The example inverter circuit has relatively low conduction losses through Q2 and Q3 due to the low specific on-resistance of Silicon Carbide depletion mode JFETs, which is lower than the specific on-resistance of Silicon Carbide MOSFETs, and Silicon Carbide enhancement mode (normally-off) JFETs.

The example inverter circuit 10 has an output phase terminal Φ that is configured to be clamped to a direct current link center point when gate drive control power is not applied (lost) to all the transistor devices Q1 to Q4. Since normally-off devices are used for Q1 and Q4, there is no inherent shoot-through condition upon loss of gate drive control power to all the transistor devices Q1 to Q4.

The inverter circuit 10 synthesizes three node voltages ("levels") at the phase output. A two-level inverter, by contrast, is only able to synthesize two voltage levels. Consequently, the three-level neutral point clamped inverter is able to produce a less distorted waveform than the two-level inverter of the prior art.

Features of the disclosed examples include using silicon carbide normally-on (depletion mode) JFETs for Q2 and Q3, which reduces conduction losses for a given chip area while maintaining insusceptibility to shoot-through faults. Another feature of the disclosed examples includes the ability to clamp the output voltage to a DC link center point when no gate drive voltages are applied to all the transistor devices Q1 to Q4. This zero output voltage property may be desirable for powering certain loads.

The preceding description is exemplary rather than limiting in nature. Variations and modifications to the disclosed examples may become apparent to those skilled in the art that do not necessarily depart from the scope of the invention which is defined by the following claims.

## Claims

1. An inverter circuit assembly, comprising:
at least one first transistor device (Q1, Q4); and
at least one second transistor device (Q2, Q3) comprising a silicon carbide junction gate field-effect transistor, wherein the at least one second transistor device is an inner transistor device relative to the at least one first transistor device.

2. The inverter circuit assembly of claim 1, wherein the inverter circuit comprises two of the first transistor device and two of the second transistor device.

3. The inverter circuit assembly of claim 1, wherein the inverter circuit assembly is a neutral point clamped inverter circuit.

4. The inverter circuit assembly of claim 1, wherein the silicon carbide junction gate field-effect transistor is a normally-on, depletion mode silicon carbide junction gate field-effect transistor.

5. The inverter circuit assembly of claim 1, wherein the at least one first transistor device comprises a Silicon Carbide metal-oxide-semiconductor field-effect transistor, or wherein the at least one first transistor device comprises a junction gate field-effect transistor, or wherein the at least one first transistor device comprises an insulated gate bipolar transistor.

6. The inverter circuit assembly of claim 5, wherein the junction gate field-effect transistor is an enhancement mode junction gate field-effect transistor.

7. The inverter circuit assembly of claim 1, including an output phase terminal (Φ) configured to be clamped to a direct current link center point when gate drive power is not applied.

8. The inverter circuit assembly of claim 1, including diodes (D1-D6), wherein at least some of the diodes are Schottky diodes.

9. An inverter system, comprising:
an inverter having at least one inner transistor device (Q2, Q3) and at least one outer transistor device (Q1, Q4), wherein the at least one inner transistor device comprises a normally-on transistor.

10. The inverter system of claim 9, wherein the inverter circuit comprises no more than two inner transistor devices and at least two outer transistor devices.

11. The inverter system of claim 9, wherein a portion of the inverter is a neutral point clamped circuit.

12. The inverter system of claim 9, wherein the at least one inner transistor device is a silicon carbide junction gate field-effect transistor.

13. A method of converting DC power to AC power comprising:
commutating the AC load current through combinations of normally-on and normally-off transistor devices of an inverter circuit.

14. The method of claim 13, wherein the normally-on transistor devices are depletion mode silicon carbide junction gate field-effect transistor devices.

15. The method of claim 13, including limiting a current shoot-through upon loss of a gate drive control power using the normally-off transistor devices.
